# EUROPEAN PATENT APPLICATION

(11) **EP 1 855 499 A2**
(43) Date of publication of application: **14.11.2007**
(21) Application number: 07009410.7
(22) Date of filing: 10.05.2007
(51) Int. Cl.: H04Q 7/38

(54) **Method and apparatus for setting ciphering activation time in a wireless communications system**

(30) Priority: 10.05.2006 US 746986 P
(71) Applicant: Innovative Sonic Limited, Tortola (VG)
(72) Inventor: Jiang, Sam Shiaw-Shiang, Taipei City (TW)
(74) Representative: Weber, Joachim

(57) **Abstract**

A method for setting ciphering activation time in a user equipment of a wireless communications system includes receiving a first RRC (radio resource control) message for activating a first ciphering key, setting an activation time of a first SRB (signaling radio bearer) as a predefined number plus a first SN (sequence number) of a last PDU (protocol data unit) of a sequence of PDUs that carry a second RRC message utilized for indicating completion of activating the first ciphering key, transmitting the second RRC message on the first SRB, prohibiting the transmission of RRC messages using the first ciphering key on the first SRB, and allowing the transmission of RRC messages on the first SRB when the successful delivery of the second RRC message has been confirmed.

## Description

This application claims the benefit of the filing date of U.S. Provisional Patent Application No. 60/746,986, filed on May 10, 2006, the contents of which are hereby incorporated by reference.

The present invention relates to a method of setting ciphering activation time utilized in a user end of a wireless communications system and related communications device according to the pre-characterizing clauses of claims 1, 7, 13 and 18.

Through use of signaling radio bearers, radio resource control (RRC), layers of a user end and a network end can exchange RRC messages, as a basis for radio resource settings, and for completing various RRC control processes. In the prior art, RRC procedures can be categorized by function as RRC Connection Management Procedures, Radio Bearer Control Procedures, RRC Connection Mobility Procedures, and Measurement Procedures. RRC Connection Management Procedures are primarily for establishing, maintaining, and managing a signaling link between the user end and the network end, and include a Security Mode Control Procedure, which is used for performing encryption and integrity protection actions to secure data transmission.

The primary goal of the Security Mode Control Procedure is starting ciphering or changing a ciphering key for radio bearers. According to an RRC communications protocol specification (3GPP TS 25.331 V6.9.0) set forth by the 3^{rd} Generation Partnership Project (3GPP), initiation or update (modifying settings) of the Security Mode Control Procedure is controlled by the network end. When the Security Mode Control Procedure is initiated or modified, the network end outputs a Security Mode Command (SMC), message to the user end. After the user end receives the SMC message outputted by the network end, the user end initiates or modifies the ciphering key of the Security Mode Control Procedure, and responds with a Security Mode Complete (SMP), message sent to the network end. The SMC message comprises activation times for all downlink SRBs and radio bearers (RB. The activation time is a sequence number (SN), of a packet packed by the lower layer (the radio link control layer, RLC), i.e. the SN of a radio link control protocol data unit (PDU). Thus, through the SMC message, the network end notifies the user end that, starting from the PDU having an SN equal to the activation time, the network end will begin using new ciphering key on the SRBs and RBs. Likewise, the SMP message comprises uplink activation times for all the signaling radio bearers and all the radio bearers to indicate that the mobile will use the new ciphering key on and after the activation time for each SRB and RB.

In the prior art, to ensure that the network end and the user end can change their ciphering key synchronously, before the network end and the user end have received the corresponding SMC message and SMP message acknowledgement signals, the RLC layers of the network end and the user end are prohibited from transmitting PDUs having SNs greater than or equal to the activation time. Namely, all transmission on SRBs and RBs using acknowledged mode (AM) or unacknowledged mode (UM) is prohibited. Of course, to ensure that the SMC message and the SMP message can be sent to the user end and the network end, transmission on the SRB used for transmitting the SMC message and the SMP message will not be prohibited, i.e. transmission on SRB2 will not be prohibited. In this situation, the SMC message and the SMP message are transmitted on SRB2, which operates in AM. However, a special characteristic of AM can cause a message reception error because a latter transmitted measurement report may be received in the peer RLC entity earlier than PDUs that carry the SMP message. The measurement report is ciphered with the new key, while it will be deciphered with the old key, because the peer receiver has not received the SMP message successfully. To deal with this situation, the prior art prohibits transmission on SRB2 until the SMP message is positively acknowledged by the peer RLC entity. However, this method can cause other problems. When the user equipment (UE), is in bad radio coverage (experiencing interference from radio waves, terrain, or obstructions), SMP transmission may be delayed because several retransmissions may be needed. In this situation, if a measurement report message cannot be transmitted to the network end, the UE call may be dropped. Thus, the measurement report must be transmitted even when the SMP message has not been positively acknowledged by the peer RLC entity. A straightforward solution is to send the measurement report with the old ciphering key to the network end before the SMP message is positively acknowledged by the peer RLC entity. However, if the network end successfully receives the SMP message and activates the new key, but the ACK corresponding to the SMP message is lost, the measurement report message which was ciphered with the old key will be deciphered with the new key, causing an error.

This in mind, the present invention aims at providing a method of setting ciphering activation time utilized in a user end of a wireless communications system and related communications device that prevents deciphering errors in the user end.

This is achieved by a method of setting ciphering activation time utilized in a user end of a wireless communications system and related communications device according to claims 1, 7, 13 and 18. The dependent claims pertain to corresponding further developments and improvements.

As will be seen more clearly from the detailed description following below, the claimed method of setting ciphering activation time utilized in a user end of a wireless communications system and related communications device includes.

In the following, the invention is further illustrated by way of example, taking reference to the accompanying drawings. Thereof
Fig. 1 is a functional block diagram of a communications device,
Fig. 2 is a diagram of program code in Fig. 1, and
Figs. 3 and 4 are flow charts of the present invention method.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates.

For the universal mobile telecommunications system (UMTS), the 3G mobile communications system comprises User Equipment (UE), the UMTS Terrestrial Radio Access Network (UTRAN), and the Core Network (CN). Communications protocols utilized include Access Stratum (AS) and Non-Access Stratum (NAS). AS comprises various sub-layers for different functions, including Radio Resource Control (RRC), Radio Link Control (RLC), Media Access Control (MAC), Packet Data Convergence Protocol (PDCP), and Broadcast/Multicast Control (BMC). The sub-layers mentioned, and their operating principles, are well known in the art, and detailed description thereof is omitted. The RRC is a Layer 3 protocol, and is the core of communications protocols related to access, performing all radio resource message exchange, radio resource settings control, QoS control, channel transmission format settings control, packet segmentation and recombination processing control, and NAS-related communications protocol transmission processing.

The RRC is located in radio network controllers (RNC) of the UTRAN and the UE, and is primarily used to manage and maintain packet switching and sequencing of a Uu Interface. The RRC layer performs radio resource control in the following manner. After the RRC of the UE obtains various measurement results from the MAC and the Physical Layer, the RRC generates a Measurement Report from the various measurement results. After processing by the RLC, the MAC, and the Physical Layer, the Measurement Report is sent to the RRC of a network end, e.g. UTRAN. After a Radio Resource Assignment message sent from the RRC of the network end is received, the RRC of the user end can perform lower layer control and setting based on a result of resolving the message, e.g. setting the operation mode, packet length, and encryption method of the RLC layer, setting the channel multiplexing mapping method and channel transmission format of the MAC, and setting the operating frequency, spreading code, transmission power, synchronization method, and measurement items of the Physical Layer.

Between the user end and the network end, the RRC layer uses RRC Messages, also known as signaling, to exchange information. RRC Messages are formed from many Information Elements (IE) used for embedding necessary information for setting, changing, or releasing protocol entities of Layer 2 (RLC, MAC) and Layer 1 (Physical Layer), thereby establishing, adjusting, or canceling information exchange channels to perform data packet transportation. Through RRC Messages, the RRC layer can embed control signals needed by an upper layer in the RRC Message, which can be sent between the NAS of the user end and the CN through the radio interface to complete the required procedures.

From the standpoint of the RRC, all logical data communication exchange channels, be they for providing data transmission exchange to the user or for providing RRC layer control signal transmission exchange, are defined in the context of a Radio Bearer (RB). In the user end, the RB comprises one unidirectional or a pair of uplink/downlink logic data transmission exchange channels. In the network end, the RB comprises one unidirectional or a pair of uplink/downlink logic data transmission exchange channels.

According to different usage goals, the RB can be divided into different categories, wherein the RB specifically used for transmitting RRC signals is generally called a Signaling Radio Bearer (SRB), which includes:
1. SRB0: Uplink (UL) uses Transparent Mode (TM) transmission, Downlink (DL) uses Unacknowledged Mode (UM) transmission, and data is exchanged through a Common Control Channel.
2. SRB1: The UL and DL both use UM transmission, and data is exchanged through a Dedicated Control Channel.
3. SRB2: The UL and DL both use Acknowledged Mode (AM) transmission, and data is exchanged through a Dedicated Control Channel.
4. SRB3: The same as SRB2, but the content of the data transmitted is specifically for the upper layer of the RRC protocol with higher priority.
5. SRB4: The same as SRB3, but the data transmitted is for the upper layer of the RRC protocol with lower priority.

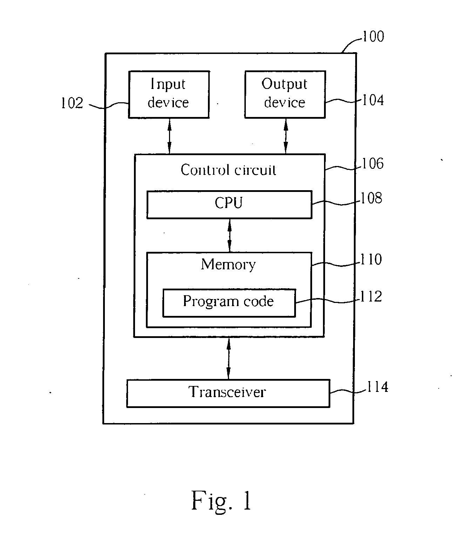

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

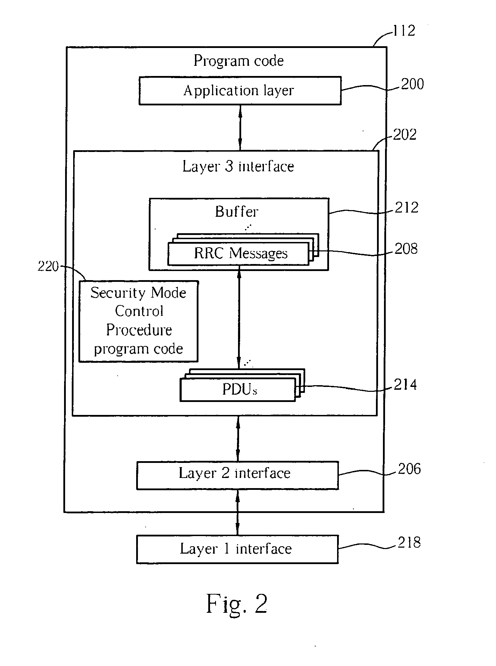

Please continue to refer to Fig. 2. Fig. 2 is a diagram of the program code 112 shown in Fig. 1. The program code 112 comprises an application layer 200, a Layer 3 interface 202, and a Layer 2 interface 206, and is coupled to a Layer 1 interface 218. The Layer 3 interface 202 comprises a buffer 212 for storing an RRC message 208, and for forming an RRC PDU 214 according to the RRC message 208. The application layer 200 provides control signals required by necessary procedures, which can be outputted by attaching the control signals to RRC PDUs 214 for setting, modifying, or releasing the Layer 2 interface 206 and the Layer 1 interface 218, to establish, modify, or cancel data exchange channels.

To prevent fake signaling from unrelated parties from compromising security, thereby protecting message transmission on a signaling radio bearer, the Layer 3 interface 202 can initiate a Security Mode Control procedure. In this situation, the present invention embodiment provides Security Mode Control Procedure program code 220.

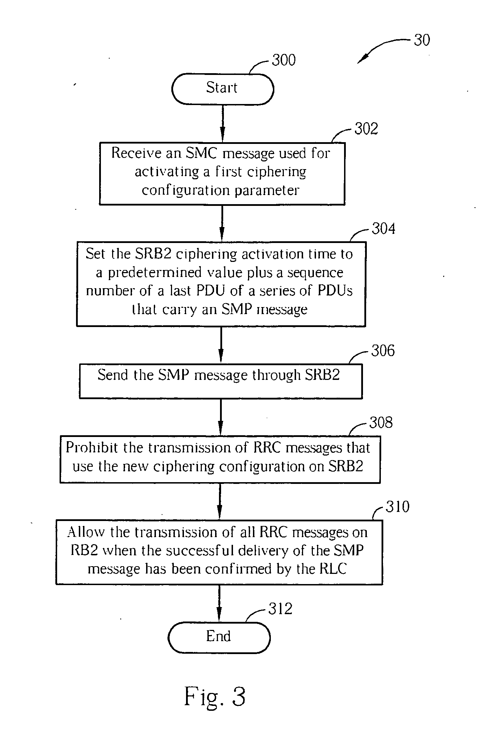

Please refer to Fig. 3, which is a diagram of a procedure 30 according to the present invention. The procedure 30 is used for configuring a ciphering activation time in a user end of the wireless communications system, and can be seen as the Security Control Mode procedure program code 220. The procedure 30 comprises the following steps:
Step 300: Start.
Step 302: Receive an SMC message used for activating a first ciphering configuration parameter.
Step 304: Set an SRB2 ciphering activation time to a predetermined value plus a sequence number of a last PDU of a series of PDUs that carry a Security Mode Complete (SMP) message.
Step 306: Send the SMP message through SRB2.
Step 308: Prohibit the transmission of RRC messages that use the new ciphering configuration on SRB2.
Step 310: Allow the transmission of all RRC messages on RB2 when the successful delivery of the SMP message has been confirmed by the RLC.
Step 312: End.

According to the procedure 30, after the receiver receives the Security Mode Command message, the SRB2 ciphering activation time is set to a sequence number of a last PDU of a series of PDUs used for transmitting the SMP message plus a predetermined value. In other words, after completing sending the SMP message and a certain number of PDUs (equal to the predetermined value) have passed, the user end will use the new ciphering configuration parameter, i.e. the first ciphering configuration parameter, on the uplink SRB2. Preferably, the predetermined value will be greater than or equal to a number of PDUs required for transmitting a measurement report message. In this situation, the user end finishes sending the SMP message and at least the measurement report message over SRB2 before using the new ciphering configuration parameter. In this way, the measurement report message (which uses the old ciphering configuration parameter for ciphering) sent out before delivery of the SMP message is confirmed can be deciphered successfully by the network end using the old ciphering configuration parameter.

Thus, using the procedure 30, the user end uses the old ciphering configuration parameter to cipher the measurement report message and send it to the network end before delivery of the SMP message is confirmed, and configures the SRB2 ciphering activation time, such that the user end will only start using the new ciphering configuration parameter on SRB2 after finishing transmitting the SMP message and the measurement report message. In this way, deciphering errors can be prevented in the network end.

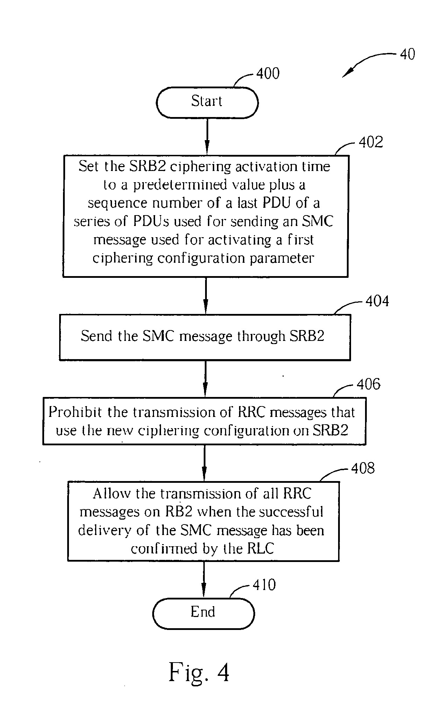

The procedure 30 targets the user end. The present invention also provides an embodiment used for processing configuration and reconfiguration of ciphering in the network end. Please refer to Fig. 4, which is a diagram of a procedure 40 according to the present invention. The procedure 40 is used for configuring or reconfiguring the ciphering mechanism in the network end of the wireless communications system, and can be seen as the Security Mode Control Procedure program code 220. The procedure 40 comprises the following steps:
Step 400: Start.
Step 402: Set the SRB2 ciphering activation time to a predetermined value plus a sequence number of a last PDU of a series of PDUs used for sending an SMC message used for activating a first ciphering configuration parameter.
Step 404: Send the SMC message through SRB2.
Step 406: Prohibit the transmission of RRC messages that use the new ciphering configuration on SRB2.
Step 408: Allow the transmission of all RRC messages on RB2 when the successful delivery of the SMC message has been confirmed by the RLC.
Step 410: End.

According to the procedure 40, when the network end configures or reconfigures the ciphering mechanism, the SRB2 ciphering activation time is set to the sequence number of the last PDU in the series of PDUs used for transmitting the SMC message plus the predetermined value. In other words, the network end will only start using the new ciphering configuration parameter, i.e. the first ciphering configuration parameter, on the downlink SRB2 after finishing sending the SMC message and a certain number (equal to the predetermined value) of PDUs have passed. Preferably, the predetermined value is greater than or equal to the number of PDUs required for transmitting a HANDOVER message. In this situation, the network end will only start using the new ciphering configuration parameter after finishing transmitting the SMC message and at least the HANDOVER message on SRB2. In this way, the HANDOVER message (using the old ciphering configuration parameter for ciphering) sent before delivery of the SMC message is confirmed can be accurately deciphered by the user end using the old ciphering configuration parameter.

Thus, through the procedure 40, before delivery of the SMC message is confirmed, the network end ciphers the HANDOVER message using the old ciphering configuration parameter and sends it to the user end, then configures the SRB2 ciphering activation time such that the network end will only start using the new ciphering configuration parameter on the downlink SRB2 after finishing sending the SMC message and the HANDOVER message. In this way, the present invention can prevent deciphering errors in the user end.

In summary of the above, the present invention can set the uplink SRB2 ciphering activation time to the sequence number of the last PDU of the series of PDUs used for sending the SMP message plus the predetermined value, or the present invention can set the downlink SRB2 ciphering activation time to the sequence number of the last PDU of the series of PDUs used for sending the SMC message plus the predetermined value, so as to prevent deciphering errors from occurring in the network end or the user end, allowing for smooth exchange of RRC messages, such as the measurement report message and the HANDOVER message, which helps maintain normal operation of the system.

## Claims

1. A method of setting ciphering activation time utilized in a user end of a wireless communications system comprising:
receiving a radio resource control message utilized for activating a first ciphering configuration parameter; (302)
sending a second radio resource control message through a first signaling radio bearer; (306)
prohibiting transmission of radio resource control messages using the first ciphering configuration parameter through the first signal radio bearer; (308) and
allowing transmission of any radio resource control message after successful delivery of the second radio resource control message is confirmed; (310)
**characterized by**:
before sending the second radio resource control message, setting the first ciphering activation time of the first signaling radio bearer to a predetermined value plus a first sequence number, wherein the first sequence number is a sequence number of a last protocol data unit of a series of protocol data units used for sending the second radio resource control message used for indicating completion of activating the first ciphering configuration parameter (304).

2. The method of claim 1, **characterized in that** the first ciphering activation time is utilized for activating use of the first ciphering configuration parameter (302) on the first signaling radio bearer. (306)

3. The method of claim 1, **characterized in that** the first signaling radio bearer (306) operates in Acknowledged Mode.

4. The method of claim 1, wherein the predetermined value is 1.

5. The method of claim 1, wherein the predetermined value is greater than or equal to a number of protocol data units required for transmitting a measurement report message.

6. The method of claim 1, wherein the predetermined value is set by a network end of the wireless communications system.

7. A communications device (100) utilized in a wireless communications system for accurately setting a ciphering activation time comprising:
a controller (106) for realizing functions of the communications device;
a processor (108) installed in the controller for executing a program code (112) to control the controller; and
a memory (110) installed in the controller and coupled to the processor for storing the program code;
wherein the program code comprises:
receiving a radio resource control message utilized for activating a first ciphering configuration parameter; (302)
sending the second radio resource control message through the first signaling radio bearer; (306)
prohibiting transmission of radio resource control messages using the first ciphering configuration parameter through the first signal radio bearer; (308) and
allowing transmission of any radio resource control message after successful delivery of the second radio resource control message is confirmed; (310)
**characterized by** the program code comprising, before sending the second radio resource message, setting a first ciphering activation time of a first signaling radio bearer to a predetermined value plus a first sequence number, wherein the first sequence number is a sequence number of a last protocol data unit of a series of protocol data units used for sending a second radio resource control message used for indicating completion of activating the first ciphering configuration parameter (304).

8. The method of claim 7, wherein the first ciphering activation time is utilized for activating use of the first ciphering configuration parameter (302) on the first signaling radio bearer. (306)

9. The method of claim 7, wherein the first signaling radio bearer (306) operates in Acknowledged Mode.

10. The method of claim 7, wherein the predetermined value is 1.

11. The method of claim 7, wherein the predetermined value is greater than or equal to a number of protocol data units required for transmitting a measurement report message.

12. The method of claim 7, wherein the predetermined value is set by a network end of the wireless communications system.

13. A method of configuring or reconfiguring a ciphering mechanism in a network end of a wireless communications system comprising:
transmitting a first radio resource control message through a first signaling radio bearer; (404)
prohibiting transmission of radio resource control messages using a first ciphering configuration parameter on the first signaling radio bearer; (406) and
allowing transmission of any radio resource control message on the first signaling radio bearer after successful delivery of the first radio resource control message is confirmed; (408)
**characterized by**:
before transmitting the first radio resource control message, setting the first ciphering activation time of the first signaling radio bearer to a predetermined value plus a first sequence number, wherein the first sequence number is a sequence number of a last protocol data unit in a series of protocol data units used for transmitting the first radio resource control message used for activating the first ciphering configuration parameter (402).

14. The method of claim 13, **characterized in that** the first ciphering activation time is utilized for activating use of the first ciphering configuration parameter (302) on the first signaling radio bearer. (306)

15. The method of claim 13, **characterized in that** the first signaling radio bearer (306) operates in Acknowledged Mode.

16. The method of claim 13, **characterized in that** the predetermined value is 1.

17. The method of claim 13, **characterized in that** the predetermined value is greater than or equal to a number of protocol data units required for transmitting a HANDOVER message.

18. A communications device (100) utilized in a wireless communications system for accurately configuring or reconfiguring a ciphering mechanism, the communications device comprising:
a controller (106) for realizing functions of the communications device;
a processor (108) installed in the controller for executing a program code (112) to control the controller; and
a memory (110) installed in the controller and coupled to the processor for storing the program code;
wherein the program code comprises:
transmitting a first radio resource control message through a first signaling radio bearer; (404)
prohibiting transmission of radio resource control messages using a first ciphering configuration parameter on the first signaling radio bearer; (406) and
allowing transmission of any radio resource control message on the first signaling radio bearer after successful delivery of the first radio resource control message is confirmed; (408)
**characterized by** the program code comprising, before transmitting the first radio resource control message through the first signaling radio bearer, setting a first ciphering activation time of the first signaling radio bearer to a predetermined value plus a first sequence number, wherein the first sequence number is a sequence number of a last protocol data unit in a series of protocol data units used for transmitting the first radio resource control message used for activating the first ciphering configuration parameter (402).

19. The method of claim 18, **characterized in that** the first ciphering activation time is utilized for activating use of the first ciphering configuration parameter (302) on the first signaling radio bearer. (306)

20. The method of claim 18, **characterized in that** the first signaling radio bearer (306) operates in Acknowledged Mode.

21. The method of claim 18, **characterized in that** the predetermined value is 1.

22. The method of claim 18, **characterized in that** the predetermined value is greater than or equal to a number of protocol data units required for transmitting a HANDOVER message.
